# EUROPEAN PATENT APPLICATION

(11) **EP 4 498 480 A2**
(43) Date of publication of application: **29.01.2025**
(21) Application number: 24189609.1
(22) Date of filing: 18.07.2024
(51) Int. Cl.: H01M 10/613

(54) **BATTERY ASSEMBLY**

(30) Priority: 28.07.2023 KR 20230098589
(71) Applicant: SK On Co., Ltd., Seoul 03161 (KR)
(72) Inventor: RHEE, Seo Roh, Daejeon (KR); CHOI, Keun Woo, Daejeon (KR); KIM, Ji San, Daejeon (KR); PARK, Chi Min, Daejeon (KR); LEE, Seung Dong, Daejeon (KR)
(74) Representative: Prüfer & Partner mbB Patentanwälte · Rechtsanwälte

(57) **Abstract**

The present disclosure relates to a battery assembly including a case accommodating a plurality of battery cells, a heat dissipation part located between the plurality of battery cells and the accommodating bottom surface, and a pad part located between a plurality of battery groups in which adjacent battery cells among the plurality of battery cells are grouped by a preset number of cells, wherein an absolute value of a difference between a surface hardness of the heat dissipation part and a surface hardness of the pad part is less than or equal to a preset allowable value.

## Description

### BACKGROUND OF THE INVENTION

### 1. Field

The present disclosure relates to a battery assembly. More specifically, the present disclosure relates to a battery assembly with improved stability and lifespan.

### 2. Description of the Related Art

A conventional battery assembly includes an elastomeric pad that is located between a plurality of battery cells accommodated inside and applies appropriate pressure to the battery cells. This is to prevent Li-plating phenomenon caused by lifting of the electrode interface located inside the battery cell.

In addition, a conventional battery assembly supports and fixes the plurality of battery cells inside the case and includes a thermal adhesive to dissipate heat from the plurality of battery cells to the outside.

In general, thermal adhesive and elastomeric pad may be made of materials with different surface hardness. Here, the pressure applied to the battery cell may not be uniform and stress may be concentrated locally, and this deviation in pressure may cause damage to the battery cell. In addition, gas inevitably generated inside the battery cell may not be discharged smoothly.

### SUMMARY OF THE INVENTION

According to an aspect of the present disclosure, an object to be achieved is to maintain the pressure inside a battery cell uniformly by resolving surface pressure deviation between a plurality of battery cells and a heat dissipation part.

According to another aspect of the present disclosure, an object to be achieved is to prevent local stress concentration in an exterior material or a case of the battery cell.

According to another aspect of the present disclosure, an object to be achieved is to delay fire and/or explosion of a battery assembly by, when off-gas generated inside the battery cell is discharged, allowing it to be discharged through a preset venting path.

According to another aspect of the present disclosure, an obj ect to be achieved is to improve the lifespan and stability of the battery assembly.

The battery assembly according to the present disclosure may be widely applied in the field of green technology such as electric vehicles, battery charging stations, energy storage systems (ESS), and other battery-using photovoltaics and wind power. In addition, the battery assembly according to the present disclosure may be used for eco-friendly mobility, including electric vehicles and hybrid vehicles, to prevent climate change by suppressing air pollution and greenhouse gas emissions.

A battery assembly according to the present disclosure includes: a case accommodating a plurality of battery cells; an accommodating bottom surface forming a bottom surface of the case; a heat dissipation part located between the plurality of battery cells and the accommodating bottom surface; and a pad part located between a plurality of battery groups in which one or more battery cells among the plurality of battery cells are grouped by a preset number of cells. In addition, an absolute value of a difference between a surface hardness of the heat dissipation part and a surface hardness of the pad part may be 50 or less based on Shore A hardness.

In addition, the pad part is deformable according to expansion and contraction of a battery cell adjacent to the pad part.

Meanwhile, the heat dissipation part may be made of a thermally conductive material.

In addition, the heat dissipation part may be made of an adhesive material.

In addition, the heat dissipation part may be applied on the accommodating bottom surface in a viscous liquid state and then hardened into a solid state after a preset hardening time.

The plurality of battery cells may be stacked along a preset stacking direction, each of the plurality of battery cells may include a main body part accommodating an electrode assembly configured to store or generate electrical energy; and a lead tab part electrically connected to the electrode assembly and protruding outward from the main body part along any one direction perpendicular to the stacking direction, and the pad part may be in contact with the main body parts of some battery cells located most adjacent to the pad part among the plurality of battery cells.

The heat dissipation part may be in contact with the accommodating bottom surface, a pad bottom surface facing the accommodating bottom surface among one surface of the pad part, and a main body bottom surface facing the accommodating bottom surface among one surface of the main body part.

The pad part may be provided in plurality, and the plurality of pad parts may press any one surface of each of the main body parts above a preset surface pressure value.

In addition, the main body part may include a main body first surface provided in a direction facing the stacking direction, a main body second surface located to face the main body first surface, and a main body bottom surface connected to the main body first surface and the main body second surface and facing the accommodating bottom surface, wherein an absolute value of a difference in pressure applied to the main body first surface, the main body second surface, and the main body bottom surface by the pad part and the heat dissipation part may be less than or equal to a preset allowable pressure.

Meanwhile, the pad part may be formed by stacking different materials.

The pad part may include an inner layer part provided in a sheet shape and formed of polymer material; and an outer layer part of a flame-retardant material bonded to both sides of the inner layer part, respectively.

Meanwhile, the battery assembly may further include a busbar assembly located inside the case and electrically connecting the plurality of battery cells to the outside.

Each of the plurality of battery cells may include a main body part accommodating an electrode assembly configured to generate and store electricity inside; and a lead tab part protruding from the inside of the main body part to the outside to connect the electrode assembly and the busbar, and the busbar assembly may include a busbar electrically connected to each of the lead tab parts; a busbar frame located between the busbar and each of the main body parts to support the busbar; a penetration hole formed by penetrating the busbar frame in a direction from the main body part toward the busbar so that each of the lead tab parts is inserted; and a contact part located between an inner surface of the penetration hole and the lead tab part to contact the penetration hole and the lead tab part, wherein an absolute value of a difference between a surface hardness of the contact part and a surface hardness of the busbar frame may be less than or equal to a preset difference value.

The contact part may be in the form of foam made of polymer material.

Along the direction from the main body part toward the busbar, a depth of the inner surface of the penetration hole may be greater than or equal to a length of the contact part.

Meanwhile, a battery assembly according to the present disclosure includes: a plurality of battery cells each including a main body part configured to generate or store electrical energy inside, a lead tab protruding from the inside of the main body part to the outside of the main body part, and a lead film located on an area in contact with the main body part of an outer surface of the lead tab to insulate between the lead tab and the main body part, and arranged along one direction; a busbar extending along the one direction and electrically connected to each of the lead tabs; a busbar frame located between the busbar and each of the main body parts to support the busbar; a plurality of penetration holes formed by penetrating the busbar frame and into which each of the lead tabs is inserted; and a plurality of contact parts located in the plurality of penetration holes and in contact with each of the lead films, wherein an absolute value of a difference between a surface hardness of each of the lead films and a surface hardness of each of the contact parts may be 50 or less based on Shore A hardness.

In addition, an absolute value of a difference between the surface hardness of each of the contact parts and a surface hardness of the busbar frame may be 50 or less based on Shore A hardness.

Meanwhile, a battery assembly according to the present disclosure includes: a case accommodating a plurality of battery cells; an accommodating bottom surface forming a bottom surface of the case; a heat dissipation part located between the plurality of battery cells and the accommodating bottom surface; and a pad part located between the plurality of battery cells, wherein an absolute value of a difference between a surface hardness of the heat dissipation part and a surface hardness of the pad part may be 50 or less based on Shore A hardness.

Meanwhile, a battery assembly according to the present disclosure includes: a case forming an accommodation space for accommodating a plurality of battery cells; an accommodating bottom surface forming a bottom surface of the accommodation space; a separation frame separating the accommodation space into a plurality of spaces; a heat dissipation part located between the plurality of battery cells and the accommodating bottom surface; and a pad part located between the plurality of battery cells, wherein an absolute value of a difference between a surface hardness of the heat dissipation part and a surface hardness of the pad part may be 50 or less based on Shore A hardness.

According to an embodiment of the present disclosure, it is possible to maintain the pressure inside the battery cells uniformly by resolving the surface pressure deviation between the plurality of battery cells and the heat dissipation part.

According to another embodiment of the present disclosure, it is possible to prevent local stress concentration in the exterior material or case of the battery cell.

According to another embodiment of the present disclosure, it is possible to delay fire and/or explosion of the battery assembly by, when off-gas generated inside the battery cell is discharged, allowing it to be discharged through a preset venting path.

According to another embodiment of the present disclosure, it is possible to improve the lifespan and stability of the battery assembly.

### BRIEF DESCRIPTION OF THE DRAWINGS

FIG. 1 is an exploded view of an example of a battery assembly according to the present disclosure.
FIG. 2 illustrates an example of a plurality of battery cells and a pad part located inside a battery assembly.
FIG. 3 is an enlarged example of a pad part according to the present disclosure.
FIG. 4 illustrates various embodiments according to changes in surface hardness of a heat dissipation part and a pad part.
FIG. 5 illustrates a cross section of a busbar frame, a busbar, a contact part, and a lead tab part viewed from a Z-direction.
FIG. 6 schematically illustrates another example of a battery assembly according to the present disclosure.

### DETAILED DESCRIPTION

Hereinafter, preferred embodiments of the present disclosure will be described in detail with reference to the accompanying drawings. Configurations or control methods of a device which will be described below is merely for the purpose of explaining the embodiments of the present disclosure and is not intended to limit the scope of the present disclosure, and the same reference numbers used throughout the specification indicate the same components.

Specific terms used in the present specification are merely for convenience of explanation and are not used to limit the illustrated embodiments.

Meanwhile, a battery assembly according to the present disclosure is a general term for a battery module, a battery pack, and an energy storage system (ESS). The battery module refers to a battery assembly in which a plurality of battery cells are bundled together in one or more numbers and placed in a case to protect them from external shock, heat, vibration, etc.

Further, the battery pack refers to a battery assembly that accommodates the battery module in a preset number to achieve the final desired voltage or power.

In addition, the battery assembly according to the present disclosure may refer to a battery pack with a cell-to-pack (CTP) structure that generates a desired voltage or power by accommodating a plurality of battery cells in a preset number while omitting the battery module.

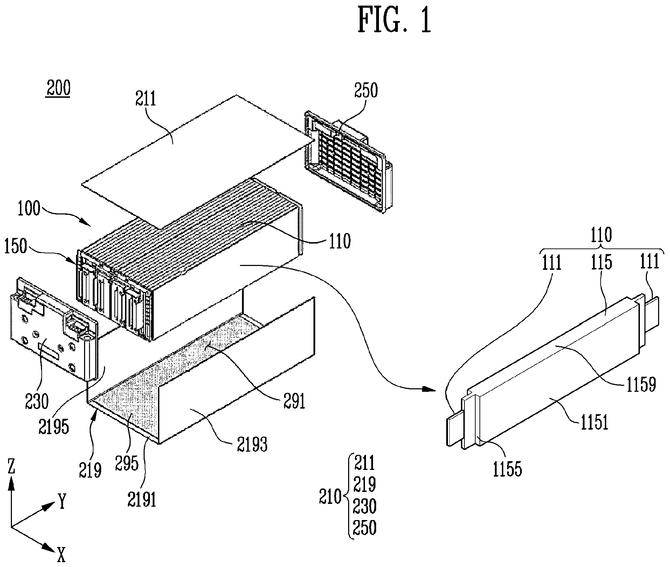

FIG. 1 is an exploded view of an example of a battery assembly 200 according to the present disclosure.

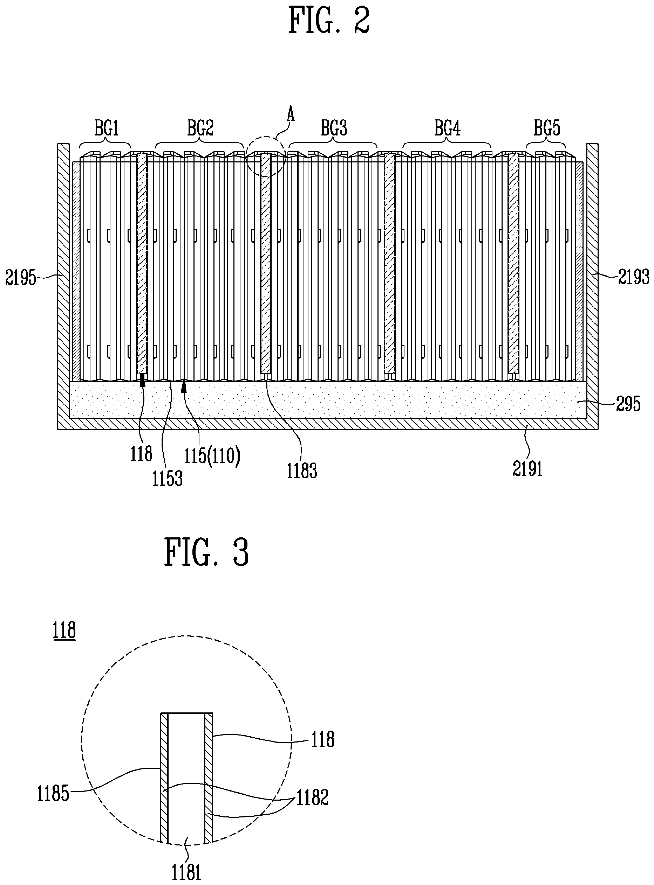

Referring to FIG. 1, the battery assembly 200 includes a case 210 accommodating a plurality of battery cells 110, an accommodating bottom surface 2191 forming a bottom surface of the case 210, a heat dissipation part 295 located between the plurality of battery cells 110 and the accommodating bottom surface 2191, and a pad part 118 located between a plurality of battery groups (BG1, BG2, BG3, BG4 and BG5, see FIG. 2) in which adjacent battery cells 110 among the plurality of battery cells 110 are grouped by a preset number of cells.

Any one battery cell 110 among the plurality of battery cells 110 may include a main body part 115 including an electrode assembly (not shown) configured to store or generate electrical energy, and lead tab part 111 electrically connected to the electrode assembly and protruding outward from the main body part 115.

In other words, any one battery cell 110 refers to a secondary battery that may be used by charging and discharging electrical energy. Specifically, the electrode assembly (not shown) is in a form in which a cathode, an anode, and a separator are stacked, and the main body part 115 may include the electrode assembly and an electrolyte in contact with at least a portion of the electrode assembly.

The main body part 115 may be an exterior material (or pouch) made of a flexible material, or may be a case having a cylindrical or square shape.

The lead tab part 111 may protrude from the inside of the main body part 115 to the outside to electrically connect the electrode assembly to the outside. It will be electrically connected to the electrode assembly inside the main body part 115, and will be electrically connected to a busbar assembly 150 outside the main body part 115.

Referring to FIG. 1, the plurality of battery cells 110 may be arranged along one arbitrary direction. Considering the narrow space of the case 210, the plurality of battery cells 110 may be stacked along a preset stacking direction (for example, the X-direction in FIG. 1). The stacking direction may be one of arbitrary directions.

As shown in FIG. 1, the plurality of battery cells 110 may be arranged along the stacking direction, so that a main body first surface 1151 of one battery cell 110 or a main body second surface (not shown) located in the opposite direction of the main body first surface 1151 of the one battery cell 110 overlap a main body second surface or a main body first surface 1151 of another adjacent battery cell 110.

Specifically, stacking the plurality of battery cells 110 along the stacking direction will mean that each of the main body first surfaces 1151 is arranged parallel to each other and each of the main body second surfaces is arranged parallel to each other.

In other words, each of the main body parts 115 of the plurality of battery cells 110 will be stacked along the stacking direction. In other words, each of the main body parts 115 may be located to overlap along the Y-direction.

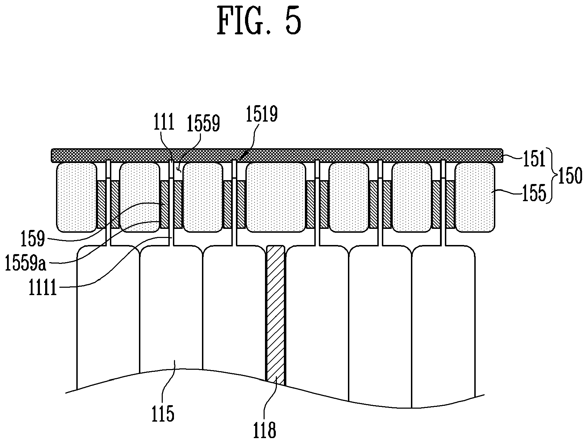

The battery assembly 200 may further include a busbar assembly 150 for electrically connecting the plurality of battery cells 110 to the outside. The busbar assembly 150 may include a busbar 151 (see FIG. 5) electrically connected to the plurality of battery cells 110 and a busbar frame 155 supporting the busbar 151.

It may be referred to as a cell stacking assembly, including the plurality of battery cells 110 and the busbar assembly 150 coupled to the plurality of battery cells 110.

While the busbar 151 is made of a metal material with electrical conductivity, the busbar frame 155 may be made of a polymer material for electrical insulation. The busbar 151 may be made of copper or aluminum, while the busbar frame 155 may be made of a polymer material such as engineering plastic. Therefore, the busbar frame 155 may be injection molded, and the busbar frame 155 may be referred to as an injection molded product.

The busbar 151 may connect the plurality of battery cells 110 in series or parallel. This is to output electrical energy at a preset voltage through the plurality of battery cells 110.

The busbar 151 and the busbar frame 155 may extend along the stacking direction at a location where each of the lead tab parts 111 protrudes.

Referring to FIG. 1, since the lead tab part 111 protrudes on both sides of the main body part 115 in a direction away from the main body part 115, the busbar 151 and the busbar frame 155 may also be located on both sides of the plurality of battery cells 110.

Meanwhile, the plurality of battery cells 110 may repeat expansion and contraction during charging and/or discharging. Accordingly, the battery assembly 200 may require a member to buffer against deformation of the plurality of battery cells 110. To this end, the battery assembly 200 may further include the pad part 118 located between the battery groups (BG1, BG2, BG3, BG4 and BG5) in which some adjacent battery cells 110 among the plurality of battery cells 110 are grouped by a preset number of cells to pressurize the plurality of battery cells 110.

The pad part 118 may be located between each of the battery cells 110. However, considering the limited space of the battery assembly, it would be preferable to be located between the battery groups (BG1, BG2, BG3, BG4, and BG5).

In addition, the plurality of battery cells 110 may generate heat when charging and discharging. Since the plurality of battery cells 110 must operate under certain conditions, it would be desirable to discharge heat generated from the plurality of battery cells 110 to the outside as quickly as possible.

To this end, the battery assembly 200 may further include a heat dissipation part 295 located between the plurality of battery cells 110 and the accommodating bottom surface 2191. The heat dissipation part 295 may be made of a thermally conductive and adhesive material.

The heat dissipation part 295 including a thermally conductive material may improve the thermal conductivity of the battery assembly 200 by contacting the plurality of battery cells 110 and the accommodating bottom surface 2191.

In addition, the heat dissipation part 295 including an adhesive material may also serve to fix the plurality of battery cells 110 inside the case 210.

Meanwhile, the heat dissipation part 295 may be a material that is applied to the accommodating bottom surface 2191 in a liquid state when manufacturing the battery assembly 200 and then hardened into a solid state. Meanwhile, in a liquid state, the heat dissipation part 295 may be made of a polymer material with viscosity.

In addition, the heat dissipation part 295 may not be formed by mixing the thermally conductive material and the adhesive material, but may be formed of a material having both properties at the same time.

Referring to FIG. 1, the case 210 may form a accommodation space 291 for accommodating the cell stacking assembly 100. The case 210 may include the accommodating bottom surface 2191 forming the bottom surface of the accommodation space 291 and the bottom surface of the case 210, and a first side surface 2193 and a second side surface 2195 facing each other among the side surfaces of the accommodation space 291. The first side surface 2193 and the second side surface 2195 may be respectively connected to the accommodating bottom surface 2191 to form a accommodating body 219. In other words, when viewed from the Y-direction, the accommodating body 219 may be provided in a U-shape or a channel shape with an open upper surface.

The case 210 is positioned to face the accommodating bottom surface 2191 and may further include an accommodating cover 211 coupled to the first side surface 2193 and the second side surface 2195.

In addition, the case 210 may further include end plates 230, 250 connected to the first side surface 2193, second side surface 2195, accommodating bottom surface 2191 and the accommodating cover 211 to close both open ends of the accommodating body 219, respectively.

In other words, the end plates 230, 250, the accommodating bottom surface 2191, the first side surface 2193, the second side surface 2195, and the accommodating cover 211 will together form the accommodation space 291.

FIG. 2 illustrates an example of the plurality of battery cells 110 and the pad part 118 located inside a battery assembly 200.

As described above, the volume of each of the main body parts 115 may change due to contraction and expansion of the plurality of battery cells 110 during charging and discharging. The battery assembly 200 may further include the pad part 118 that serves as a buffer to respond to changes in volume of each of the main body parts 115. In addition, the pad part 118 may be provided to press each of the main body parts 115 above a preset surface pressure value. Accordingly, the pad part 118 may be referred to as a buffer pad, a pressure pad, or an elastomeric pad.

The pad part 118 may be located between the plurality of battery cells 110. Considering the size of the accommodation space 291, it may be preferably located between the battery groups (BG1, BG2, BG3, BG4, and BG5) grouped by a preset number of cells among the plurality of battery cells 110.

In the present specification, the battery group (BG1, BG2, BG3, BG4, and BG5) refers to an assembly in which at least one battery cell 110 adjacent to each other among the plurality of battery cells 110 is grouped by a preset number of cells.

Therefore, the number of battery groups (BG1, BG2, BG3, BG4, and BG5) may be equal to or smaller than the number of the plurality of battery cells. However, preferably, the battery group (BG1, BG2, BG3, BG4, and BG5) groups adjacent battery cells 110, and thus will be smaller than the number of the plurality of battery cells.

FIG. 2 illustrates five battery groups (BG1, BG2, BG3, BG4, and BG5) as an example, but the number of cells and the number of battery groups are not limited thereto and may vary depending on the design.

Meanwhile, the battery assembly 200 may include the pad part 118 located between the battery groups (BG1, BG2, BG3, BG4, and BG5). In addition, the pad part 118 may not only be located between the battery groups (BG1, BG2, BG3, BG4, and BG5), but also between the plurality of battery cells 110 and the case 210 along the stacking direction.

In other words, if the battery cells 110 located at both ends along the stacking direction are referred to as a first battery cell (not shown) and a second battery cell (not shown), respectively, the pad part 118 may also be located between the first battery cell and the first side surface 2193 and between the second battery cell and the second side surface 2195.

If the stacking direction is different, the pad part 118 may be located between the first battery cell and any one end plate 230, or between the second battery cell and another end plate 250.

Referring to FIG. 2, the number of cells may vary depending on location. Along the stacking direction, the number of battery groups located closest to the first side surface 2193 and the second side surface 2195 may be different from the number of the remaining battery groups. In addition, among the plurality of battery groups (BG1, BG2, BG3, BG4 and BG5), the battery groups located at both ends along the stacking direction, i.e., the number of the two battery groups (BG1, BG5) located closest to the first side surface 2193 and the second side surface 2195 may be different from the number of the remaining battery groups (BG2, BG3, and BG4).

The pad part 118 may be located between each of the battery groups (BG1, BG2, BG3, BG4, and BG5), between the first side surface 2193 and one battery group located closest to the first side surface 2193, or between the second side surface 2195 and another battery group located closest to the second side surface 2195.

The thickness of the pad part 118 may also vary depending on the location. For example, the thickness of the pad part 118 between the first side surface 2193 and one battery group located closest to the first side surface 2193, or between the second side surface 2195 and the other battery group (BG1, BG2, BG3, BG4, and BG5) located closest to the second side surface 2195 may be different from the thickness of the pad part 118 located between each of the battery groups (BG1, BG2, BG3, BG4, and BG5).

Meanwhile, the heat dissipation part 295 may be located between the accommodating bottom surface 2191 and the plurality of battery cells 110 in the accommodation space 291, which is an internal space of the case 210.

The heat dissipation part 295 may be provided to support or fix the plurality of battery cells 110. To this end, the heat dissipation part 295 may be made of an adhesive polymer. For example, the heat dissipation part 295 may be a thermal adhesive.

In addition, the heat dissipation part 295 may be formed of a thermally conductive material with excellent thermal conductivity in order to discharge heat generated from the plurality of battery cells 110 to the outside.

Similar to a general adhesive, the heat dissipation part 295 may be applied or sprayed on the accommodating bottom surface 2191 in a liquid state with viscosity. And after the preset hardening time has elapsed, the heat dissipation part 295 may undergo a phase change to a solid state.

In addition, in a state where the heat dissipation part 295 is not completely hardened, by placing the plurality of battery cells 110 and the pad part 118 in the accommodation space 291, when the heat dissipation part 295 is hardened, the heat dissipation part will be able to fix the plurality of battery cells 110. Accordingly, before the heat dissipation part 295 is hardened, the heat dissipation part 295 may seep between the plurality of battery cells 110 and the pad part 118.

Specifically, during hardening, the heat dissipation part 295 will be in contact with a pad bottom surface 1183 facing the accommodating bottom surface 2191 among one surface of the pad part 118, and a main body bottom surface 1153 facing the accommodating bottom surface 2191 among one surface of the main body part 115.

To this end, the heat dissipation part 295 may be formed of a thermally conductive adhesive material. For example, the heat dissipation part 295 may be formed of a polymer material such as polyurethane, epoxy, silicone, etc. However, the heat dissipation part 295 may be made of any material as long as it has thermal conductivity and adhesive properties.

FIG. 3 is an enlarged example of the pad part 118 according to the present disclosure.

Referring to FIG. 3, the pad part 118 may be in a shape of a pad or sheet having a predetermined thickness along the stacking direction. Referring to FIG. 1, the battery cell 110 may include a main body first surface 1151 and a main body second surface (not shown) provided along the stacking direction.

When located between the plurality of battery cells 110, the pad part 118 will be arranged to contact the main body first surface 1151 of any one battery cell 110 and the main body second surface of the other battery cell 110.

The pad part 118 may be formed of one material or may be a stack of various materials.

If the pad part 118 is formed of several materials, the pad part 118 may include an inner layer part 1181 located at the center of the pad part and an outer layer part 1182 stacked on both side surfaces of the inner layer part 1181 along the stacking direction. Accordingly, each of the outer layer parts 1182 may contact the main body first surface 1151 of any one battery cell 110 and the main body second surface of the other battery cell 110. Specifically, the outer layer surface 1185, which is the surface of the outer layer part 1182, may contact the main body first surface 1151 of any one battery cell 110 or the main body second surface of the other battery cell 110.

The pad part 118 may be formed of an elastic material. This is to ensure that the pad part 118 presses the battery cell 110 above the surface pressure value while avoiding damage. For example, the pad part 118 may be made of polyurethane, silicone, and rubber-based polymer materials. However, the material of the pad part 118 is not limited thereto.

If the pad part 118 is formed by stacking various materials, the inner layer part 1181 may be formed of a polyurethane, silicone, and rubber-based polymer material, and the outer layer part 1182 may be formed of a heat-resistant or flame-retardant material.

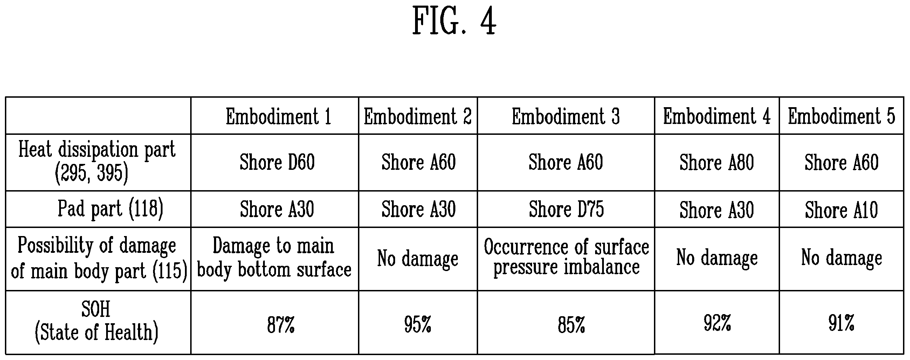

FIG. 4 illustrates various embodiments according to changes in surface hardness of a heat dissipation part 295 and the pad part 118.

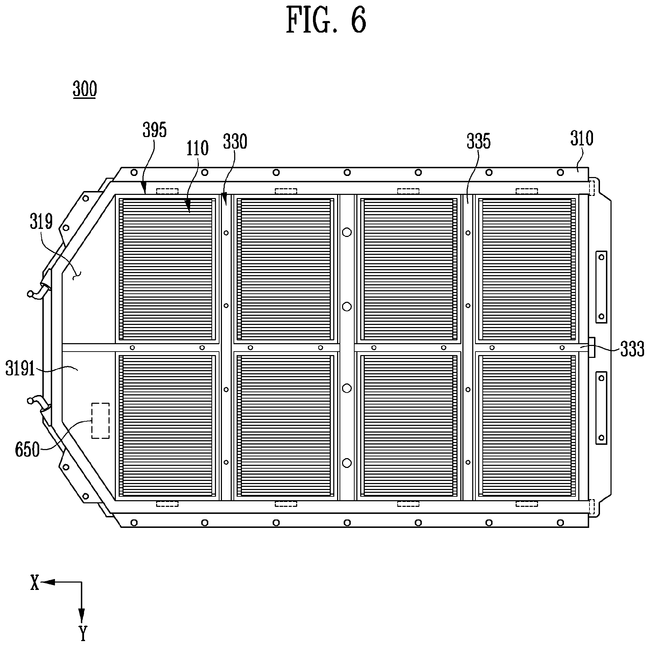

In addition, unless otherwise specified, the embodiment described in FIG. 4 may be equally applied to another example of the busbar assembly 300 (see FIG. 6), which will be described later.

The pad part 118 may be located between any two battery cells 110 among the plurality of battery cells 110. Alternatively, the pad part 118 may be located between battery groups (BG1, BG2, BG3, BG4, and BG5) that group some adjacent battery cells among the plurality of battery cells 110.

In addition, the pad part 118 may be located between one side of the case 210 and the battery cell 110 located closest to one side of the case 210 along the stacking direction, among the plurality of battery cells 110. In other words, the pad part 118 may be located between the plurality of battery cells 110 and one surface of the case 210 facing the plurality of battery cells 110 perpendicular to the stacking direction.

Meanwhile, the heat dissipation part 295 will be located between the pad bottom surface 1183 and the main body bottom surface 1153. The main body bottom surface 1153 and the pad bottom surface 1183 may be fixed and come into contact with each other by the heat dissipation part 295. In contrast, the pad part 118 may contact the main body first surface 1151 or the main body second surface without being fixed and pressurize each of the main body parts 115. As a result, the risk of damage to the battery cell 110 may increase.

In other words, when the difference in surface hardness between the pad part 118 and the heat dissipation part 295 is large, due to this, the pressure - specifically, surface pressure - applied to any one surface of each of the main body parts 115 may vary. The imbalance of surface pressure, which varies depending on the location or area in one main body part 115, concentrates stress on a specific location or area, and ultimately, the pouch may be damaged or the gas inevitably generated inside the main body part 115 may not be discharged smoothly, which may have a negative impact on battery lifespan.

To solve this problem, in the battery assembly 200 according to the present disclosure, the absolute value of the difference between the surface hardness of the heat dissipation part 295 and the surface hardness of the pad part 118 may be less than or equal to a preset allowable value.

Surface hardness is one of the physical properties that indicates the degree of hardness and softness of the surface. It may also be simply referred to as hardness. There may be several ways to measure the hardness of an object. For example, there are measurement methods such as Vickers hardness, Brinell hardness, Rockwell hardness, Shore hardness, etc. This is simply a difference in measurement method, and the hardness by each hardness measurement method may be converted to hardness by other hardness measurement methods.

In particular, Shore hardness is a widely used hardness measurement method because surface hardness may be easily measured using a Shore durometer. Shore hardness may be classified into types D, A, OO, etc., depending on the shape of the tip of the indenter that is indented on the surface of the object. Shore D hardness may be used on relatively hard surfaces, and Shore A hardness may be used on relatively soft surfaces. In addition, the Shore D hardness value and the Shore A hardness value may be converted to each other.

FIG. 4 shows the possibility of damage of the main body part 115 after measuring the shore hardness of the surfaces of the heat dissipation part 295 and the pad part 118.

Embodiment 1 is an example in which the surface hardness of the heat dissipation part 295 is relatively harder than the surface hardness of the pad part 118.

Embodiment 2 is an example in which the difference between the surface hardness of the heat dissipation part 295 and the surface hardness of the pad part 118 is relatively smaller than the difference in surface hardness in Example 1. In addition, Embodiment 2 is an example in which the surface hardness of the heat dissipation part 295 is relatively soft compared to Embodiment 1.

Embodiment 3 is an example in which, compared to Embodiment 1, the surface hardness of the heat dissipation part 295 is relatively softer than the surface hardness of the pad part 118. In addition, Embodiment 3 is an example in which the surface hardness of the pad part 118 is relatively hard compared to Embodiment 2.

Considering only the difference in surface hardness of the heat dissipation part 295 and the pad part 118, Embodiment 1 and Embodiment 3 are examples in which the difference in surface hardness between the heat dissipation part 295 and the pad part 118 is relatively larger than that of other examples.

Embodiment 4 and Embodiment 5 are examples in which the difference in surface hardness between the heat dissipation part 295 and the pad part 118 is smaller than that of Embodiment 1 and Embodiment 3, but greater than that of Embodiment 2. In addition, Embodiment 4 and Embodiment 5 are examples in which the surface hardness values of the heat dissipation part 295 and the pad part 118 are different from each other, but the difference in surface hardness is the same.

Referring to FIG. 4, it may be seen that in Embodiment 1, the possibility of damage to the main body part 115 is high. In other words, the difference in surface hardness of the heat dissipation part 295 and the pad part 118 may cause an imbalance in the surface pressure received by the main body part 115. In addition, ultimately, the imbalance of surface pressure of the main body part 115 may cause damage to the lower part of the main body part 115. Specifically, damage may occur on the main body bottom surface 1153.

On the other hand, in the case of Embodiment 2 to Embodiment 5, it may be seen that when the absolute value of the difference between the surface hardness of the heat dissipation part 295 and the pad part 118 is less than the allowable value, the risk of damage to the main body part 115 is reduced.

However, in the case of Embodiment 3, considering that there is still an imbalance in the surface pressure of the main body part 115, it may be desirable that the absolute value of the difference in surface hardness between the heat dissipation part 295 and the pad part 118 is 50 or less based on Shore A hardness.

Referring to Embodiment 1, when the surface hardness value of the pad part 118 is Shore A 30 and the surface hardness value of the heat dissipation part 295 is Shore D60, the absolute value of the difference in surface hardness between the pad part 118 and the heat dissipation part 295 becomes 80 based on Shore A hardness. As an example in which the pad part 118 is relatively soft, while the heat dissipation part 295 is very hard, it may be seen that the difference in surface hardness between the pad part 118 and the heat dissipation part 295 is large, causing damage to the main body part 115.

Referring to Embodiment 2, when the absolute value of the difference in surface hardness between the heat dissipation part 295 and the pad part 118 is 30 based on Shore A hardness, it may be seen that the main body part 115 is not damaged.

Embodiment 3 is another example in which the absolute value of the difference in surface hardness between the heat dissipation part 295 and the pad part 118 is greater than 50 based on Shore A hardness. Specifically, Embodiment 3 is an example where the absolute value of the difference in surface hardness of the pad part 118 and the heat dissipation part 295 based on Shore A is 65. In the case of the pad part 118 made of a material with a surface hardness of Shore D 75, for example, mica, it may be seen that a surface pressure imbalance occurs in the main body part 115.

On the other hand, in Embodiment 4 and Embodiment 5, the absolute values of the difference in surface hardness between the heat dissipation part 295 and the pad part 118 are all 50 or less based on Shore A hardness. Even at this time, it may be seen that the main body part 115 is not damaged.

In addition, as a result of checking the state of health (SOH) of the battery cell 110 measured after being left for 30 days at a preset temperature higher than room temperature, in Embodiment 1 and Embodiment 3, it may be seen that the SOH of the battery cell 110 is relatively reduced due to the large difference in surface hardness between the heat dissipation part 295 and the main body part 115 compared to other examples.

This sudden drop in capacity of the battery cell 110 occurs because the surface pressure, which is the pressure applied to the main body part 115, is not uniform due to the difference in surface hardness of the heat dissipation part 295 and the pad part 118. The unbalanced surface pressure or surface pressure deviation of the main body part 115 is because the gas generated inside the main body part 115 is unevenly collected in a specific area, which may cause the cathode and anode of the electrode assembly to lift. Ultimately, this becomes a factor in lowering the SOH of the battery cell 110, which means that the lifespan of the battery cell 110 is reduced.

Referring to Embodiment 2, Embodiment 4, and Embodiment 5 of FIG. 4, it may be seen that the smaller the absolute value of the difference between the surface hardness of the heat dissipation part 295 and the surface hardness of the pad part 118, there is no damage to the main body part 115 and there is almost no change in the capacity of the battery cell 110. On the other hand, in the case of Embodiment 1 and Embodiment 3, it may be seen that the capacity of the battery cell 110 varies by 87% and 85%, respectively.

Through Embodiment 2, Embodiment 4, and Embodiment 5, the absolute value of the difference in surface hardness between the pad part 118 and the heat dissipation part 295 may preferably be 50 or less based on Shore A hardness. Errors in measuring surface hardness may be additionally taken into account here.

Meanwhile, as described above, when the absolute value of the difference in surface hardness of the pad part 118 and the heat dissipation part 295 according to the present disclosure is 50 or less based on Shore A, the imbalance of surface pressure of the main body part 115 may be minimized. Minimizing the imbalance of surface pressure means that the absolute value of the difference in surface pressure measured in a first area and a second area, which are one area of the battery cell 110, is less than or equal to a preset allowable pressure value. In other words, the difference between surface pressures in any two areas of the main body part 115 may be less than or equal to the allowable pressure value.

Alternatively, when the difference in surface hardness between the pad part 118 and the heat dissipation part 295 is less than or equal to the allowable value, the difference in surface pressure between any two areas of the main body part 115 may be less than or equal to the allowable pressure value.

FIG. 5 illustrates a cross section of the busbar frame 155, the busbar 151, a contact part 159, and a lead tab part 111 viewed from a Z-direction.

Referring to FIG. 1 and FIG. 5, the battery assembly 200 may include a cell stacking assembly including a plurality of battery cells 110 stacked along the stacking direction and a busbar assembly 150 for electrically connecting the plurality of battery cells 110 to the outside, and a case 210 accommodating the cell stacking assembly 100 therein.

The busbar assembly 150 may include the busbar 151 electrically connected to each of the lead tab parts 111, the busbar frame 155 located between the busbar 151 and each of the main body parts 115 to support the busbar 151, a penetration hole 1559 formed by penetrating the busbar frame 155 in a direction from the main body part 115 toward the busbar 151 so that each of the lead tab parts 111 is inserted, and the contact part 159 located between an inner surface 1559a of the penetration hole and the lead tab part 111 to contact the penetration hole 1559 and the lead tab part 111.

The busbar frame 155 electrically insulates between the busbar 151 and the plurality of battery cells 110 and may support the busbar 151. To this end, the busbar frame 155 may be located between the plurality of battery cells 110 and the busbar 151.

Specifically, the busbar frame 155 is located between each of the main body parts 115 and the busbar 151, and each lead tab part 111 protruding from each of the main body parts 115 may be inserted into the penetration hole 1559 provided in the busbar frame 155 and then connected to the busbar 151.

In addition, the absolute value of the difference between the surface hardness of the contact part 159 and the surface hardness of the busbar frame 155 may be less than or equal to a preset difference value. As described above, this is to prevent damage to the busbar frame 155 and the plurality of battery cells 110 and to guide venting of gas generated inside the plurality of battery cells 110 in the intended direction, by setting the difference in surface pressure applied to each component to be less than or equal to the preset difference value.

The preset difference value may be the same as the allowable value based on Shore A hardness.

Meanwhile, the lead tab part 111 may include a lead tab (not shown) of metal material for electrical connection with the electrode assembly and a lead film 1111 or a sealant for electrical insulation between the lead tab and the main body part 115 and for sealing the protruding portion of the lead tab.

In addition, the penetration hole 1559 may extend along the height direction of the case 210. The penetration hole 1559 may be provided in plurality and correspond to each lead tab part 111 on a one-to-one basis, so that each of the lead tab parts 111 may be inserted into each of the plurality of penetration holes 1559. Each of the lead tab parts 111 will be inserted into each of the penetration holes 1559 and then connected to the busbar 151.

The busbar 151 may include a coupling area 1519 in the form of a groove or hole to be electrically connected to the lead tab part 111. By inserting each of the lead tab parts 111 into the coupling area 1519, the busbar 151 and the plurality of battery cells 110 will be electrically connected.

In another embodiment, the lead tab part 111 may include an area where the lead tab part 111 is bent in a U shape within a predetermined distance from the free end of the lead tab part 111. And the coupling area may be hole-shaped. Therefore, when the U-shaped bending area is inserted into the coupling area 1519, the bending area will function as a kind of stopper and enable the electrical connection with the busbar 151 to be maintained more stably.

Meanwhile, the length of the penetration hole 1559 may be smaller than the protruding length of the lead tab part 111 in the direction from the main body part 115 toward the busbar 151 after the lead tab part 111 is inserted into the penetration hole 1559. In addition, there may be a predetermined gap between the inner surface 1559a of the penetration hole and the lead tab part 111.

In order to fill the gap, the battery assembly 200 may include the contact part 159 that is provided between the inner surface 1559a of the penetration hole and the lead tab part 111, and is able to simultaneously contact the inner surface 1559a of the penetration hole and the lead tab part 111.

In addition, since the gap may be formed on both sides around the lead tab part 111, the lead tab part 111 may penetrate between the contact parts 159. On the other hand, the contact part 159 may include a first sub-contact part (not shown) and a second sub-contact part (not shown) from which the contact part 159 is separated, and the first sub-contact part and the second sub-contact part may each be located in both gaps formed between the lead tab part 111 and the inner surface 1559a of the penetration hole.

Since the penetration hole 1559 may be provided in accordance with the number of each of the lead tab parts 111, the contact part 159 may also be provided in the same number.

Meanwhile, the contact part 159 may be made of a foam-type polymer material. In addition, the material of the contact part 159 may have elasticity and electrical insulation properties. In the direction from the main body part 115 toward the busbar 151, the length of the contact part 159 provided to be less than the length of the inner surface of the penetration hole 1559, so that when the contact part 159 is inserted into the penetration hole 1559, it does not protrude from the busbar frame 155 toward the main body part 115.

The absolute value of the preset difference value of surface hardness of the contact part 159 and the busbar frame 155 may be less than or equal to the preset difference value. Likewise, the absolute value of the preset difference value of surface hardness between the contact part 159 and the lead tab part 111 (specifically, the lead film 1111) may be less than or equal to the preset difference value. In addition, the absolute value of the preset difference value of surface hardness between the lead tab part 111 (specifically, the lead film 1111) and the busbar frame 155 may be less than or equal to the preset difference value.

Through this, the surface pressure applied to the main body part 115, especially a protruding first surface 1155 (see FIG. 1) where the lead tab part 111 protrudes, among one surface of the main body part 115, may be made uniform.

In addition, the surface pressure applied to a protruding second surface (not shown) located in the opposite direction to the protruding first surface 1155 may be uniform.

In addition, the preset difference value may be equal to the allowable value. Through this, the surface pressure applied to the main body first surface 1151, the main body second surface (not shown), the main body bottom surface 1153, the protruding first surface 1155, and the protruding second surface (not shown) may be uniform. This means that gas that may be generated inside each of the battery cells 110 may be vented along the height direction of the case 210 in the direction where a main body upper surface 1159, which is the upper surface of the main body part 115, is located.

FIG. 6 schematically illustrates another example of a battery assembly 300 according to the present disclosure.

Referring to FIG. 6, another example of the battery assembly 300 according to the present disclosure may be in the form of a battery pack. In other words, the battery assembly 300 includes a case 310 accommodating a plurality of battery cells 110, an accommodating bottom surface 3191 forming a bottom surface of the case 310, a heat dissipation part 395 located between the plurality of battery cells 110 and the accommodating bottom surface 3191, and the pad part 118 (see FIG. 1) located between the plurality of battery cells 110. In addition, the absolute value of a difference between the surface hardness of the heat dissipation part 395 and the surface hardness of the pad part 118 may be 50 or less based on Shore A hardness.

FIG. 6 is an example of the case 310 viewed from above, with the accommodating cover (not shown) forming the upper surface of the accommodation space 319 removed. Referring to FIG. 6, because the battery assembly 300 may be located at the lower part of the electric vehicle, the outer shape of the case 310 may be asymmetrical. On the other hand, however, the case 310 may have a symmetrical shape, e.g., a rectangle. In other words, FIG. 6 exaggeratedly illustrates only the features necessary for explaining the battery assembly 300 according to the present disclosure, and schematically illustrates parts that are less relevant to the necessary features.

Meanwhile, the case 310 may form an accommodation space 319 for accommodating the plurality of battery cells 1100 inside.

The battery assembly 300 may include a separation frame 330 to separate the accommodation space 319 into sections. The separation frame 330 may separate the accommodation space 319 into a plurality of spaces. In the plurality of spaces, the plurality of battery cells 110 may be disposed by being divided into a predetermined number.

In addition, the separation frame 330 may serve to reinforce the strength of the case 310. To this end, the separation frame 330 may include a first frame 333 and a second frame 335 located between the battery cells 110 divided into the predetermined number. The first frame 333 and the second frame 335 may divide the accommodation space 319 horizontally (X-direction) and vertically (Y-direction) when viewed from above.

The heat dissipation part 395 may be made of the same material as the heat dissipation part 295 described in FIG. 1 to FIG. 5. Meanwhile, FIG. 6 exaggeratedly illustrated the relative area of the heat dissipation part 395 when viewed from above, in order to indicate that the location of the heat dissipation part 395 is between the plurality of battery cells 110 and the accommodating bottom surface 3191.

In other words, when viewing the battery assembly 300 from above, the area where the heat dissipation part 395 is applied to the accommodating bottom surface 3191 may be smaller than the area obtained by orthogonally projecting the battery cells 110 arranged in a predetermined number by the separation frame 330 onto the accommodating bottom surface 3191. In other words, the heat dissipation part 395 may be located on the accommodating bottom surface 3191 so that only the main body part 115 (see FIG. 1) of each of the plurality of battery cells 110 is in contact with the heat dissipation part 395.

In addition, the battery assembly 300 may further include a controller 650 for measuring the voltage and/or temperature of the plurality of battery cells 110 or controlling electrical connection and disconnection of the plurality of battery cells 110.

The present disclosure may be modified and implemented in various forms, so the scope is not limited to the above-described embodiments. Therefore, if the modified embodiment includes elements of the claims of the present disclosure, it should be regarded as falling within the scope of the present disclosure.

## Claims

1. A battery assembly comprising:
a case accommodating a plurality of battery cells;
an accommodating bottom surface forming a bottom surface of the case;
a heat dissipation part located between the plurality of battery cells and the accommodating bottom surface; and
a pad part located between a plurality of battery groups in which one or more battery cells among the plurality of battery cells are grouped by a preset number of cells,
wherein an absolute value of a difference between a surface hardness of the heat dissipation part and a surface hardness of the pad part is 50 or less based on Shore A hardness.

2. The battery assembly according to claim 1, wherein the pad part is deformable according to expansion and contraction of a battery cell adjacent to the pad part.

3. The battery assembly according to any one of the preceding claims, wherein the heat dissipation part comprises a thermally conductive material.

4. The battery assembly according to any one of the preceding claims, wherein the heat dissipation part comprises an adhesive material.

5. The battery assembly according to any one of the preceding claims, wherein the heat dissipation part is applied on the accommodating bottom surface in a viscous liquid state and then hardened into a solid state after a preset hardening time.

6. The battery assembly according to any one of the preceding claims, wherein the plurality of battery cells are stacked along a preset stacking direction,
wherein each of the plurality of battery cells comprises:
a main body part accommodating an electrode assembly configured to store or generate electrical energy; and
a lead tab part electrically connected to the electrode assembly and protruding outward from the main body part along any one direction perpendicular to the stacking direction, and
the pad part is in contact with the main body parts of some battery cells located most adjacent to the pad part among the plurality of battery cells.

7. The battery assembly according to claim 6, wherein the heat dissipation part is in contact with the accommodating bottom surface, a pad bottom surface facing the accommodating bottom surface among one surface of the pad part, and a main body bottom surface facing the accommodating bottom surface among one surface of the main body part.

8. The battery assembly according to claim 6 or 7, wherein the pad part is provided in plurality, and
the plurality of pad parts press any one surface of each of the main body parts above a preset surface pressure value.

9. The battery assembly according to any one of claims 6 to 8, wherein the main body part comprises:
a main body first surface provided in a direction facing the stacking direction;
a main body second surface located to face the main body first surface; and
a main body bottom surface connected to the main body first surface and the main body second surface and facing the accommodating bottom surface, and
wherein an absolute value of a difference in pressure applied to the main body first surface, the main body second surface, and the main body bottom surface by the pad part and the heat dissipation part is less than or equal to a preset allowable pressure.

10. The battery assembly according to any one of the preceding claims, wherein the pad part is formed by stacking different materials.

11. The battery assembly according to claim 10, wherein the pad part comprises:
an inner layer part provided in a sheet shape and formed of polymer material; and
an outer layer part of a flame-retardant material bonded to both sides of the inner layer part, respectively.

12. The battery assembly according to any one of the preceding claims, further comprising a busbar assembly located inside the case and electrically connecting the plurality of battery cells to the outside.

13. The battery assembly according to claim 12, wherein each of the plurality of battery cells comprises:
a main body part accommodating an electrode assembly configured to generate and store electricity inside; and
a lead tab part protruding from the inside of the main body part to the outside to connect the electrode assembly and the busbar,
wherein the busbar assembly comprises:
a busbar electrically connected to each of the lead tab parts;
a busbar frame located between the busbar and each of the main body parts to support the busbar;
a penetration hole formed by penetrating the busbar frame in a direction from the main body part toward the busbar so that each of the lead tab parts is inserted; and
a contact part located between an inner surface of the penetration hole and the lead tab part to contact the penetration hole and the lead tab part, and
wherein an absolute value of a difference between a surface hardness of the contact part and a surface hardness of the busbar frame is less than or equal to a preset difference value.

14. The battery assembly according to claim 13, wherein the contact part is in the form of foam made of polymer material.

15. The battery assembly according to claim 13 or 14, wherein, along the direction from the main body part toward the busbar, a depth of the inner surface of the penetration hole is greater than or equal to a length of the contact part.
